(19) Europäisches Patentamt
European Patent Office
Office européen des brevets

(11) EP 0 853 959 B1

(12) **FASCICULE DE BREVET EUROPEEN**

(45) Date de publication et mention de la délivrance du brevet:
**13.11.2002 Bulletin 2002/46**

(51) Int Cl.[7]: **A62D 3/00**, B09B 3/00

(21) Numéro de dépôt: **98400076.0**

(22) Date de dépôt: **16.01.1998**

(54) **Composition pour le traitement de l'amiante**

Zusammensetzung zur Asbestbehandlung

Composition for treating asbestos

(84) Etats contractants désignés:
**BE CH DE ES GB IT LI LU MC NL PT**

(30) Priorité: **20.01.1997 FR 9700527**

(43) Date de publication de la demande:
**22.07.1998 Bulletin 1998/30**

(73) Titulaire: **Inertec**
**92000 Nanterre (FR)**

(72) Inventeurs:
- **Cojan, Jean-Yves**
  **94160 Saint Mande (FR)**
- **Bouchelaghem, Abdelkrim**
  **75010 Paris (FR)**
- **Klein, Pierre-Yves**
  **92150 Suresnes (FR)**

(74) Mandataire: **Nevant, Marc et al**
**Cabinet Beau de Loménie,**
**158, rue de l'Université**
**75340 Paris Cedex 07 (FR)**

(56) Documents cités:
**EP-A- 0 074 913** **DE-A- 4 426 711**

- **DATABASE WPI Section Ch, Week 9351 Derwent Publications Ltd., London, GB; Class A26, AN 93-411077 XP002042514 & JP 05 311 122 A (KOATSU GAS KOGYO) , 22 novembre 1993**
- **DATABASE WPI Section Ch, Week 8051 Derwent Publications Ltd., London, GB; Class A60, AN 80-91217c XP002042515 & JP 55 142 032 A (FURUKAWA ELECTRIC CO. LTD.) , 6 novembre 1980**
- **PATENT ABSTRACTS OF JAPAN vol. 18, no. 656 (C-1286), 13 décembre 1994 & JP 06 256717 A (SHOWA DENKO KK), 13 septembre 1994,**
- **UNGER B ET AL: "IMMOBILISIERUNG VON ASBESTFASERN MIT HILFE VON OLIGOMEREN UND POLYMEREN AUF DER GRUNDLAGE VON KIESELSAUREESTERN" ENTSORGUNGS PRAXIS, vol. 13, no. 1/02, pages 24-26, 28, XP000504760**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 853 959 B1

Printed by Jouve, 75001 PARIS (FR)

## Description

L'invention concerne une composition permettant de rendre l'amiante inoffensive ainsi qu'un procédé de traitement de l'amiante mettant en oeuvre ladite composition.

Les agrégats constitués de fines fibres d'amiantes, tels que les amiantes de type serpentine (chrysotile) et les amiantes de type amphibole, provoquent une lésion des tissus et en particulier un cancer des poumons. L'élimination, sans danger, de l'amiante ou des substances contenant de l'amiante, est par conséquent d'une grande importance.

De nombreux procédés de traitement de l'amiante existent déjà. Mais soit ils ne modifient pas sensiblement ses propriétés chimiques, ou soit, si le procédé la transforme chimiquement, il s'avère lourd à mettre en oeuvre et en tout cas il paraît impossible de l'utiliser pour traiter de l'amiante floquée en place dans des bâtiments.

La demande EP-A-0 074 913 concerne des compositions organopolysiloxaniques comprenant :

- un polydiorganopolysiloxane $\alpha$, $\omega$-dihydroxylé, de viscosité mesurée à 25°C comprise entre 5 et 100 000 mPa.s,
- un polyorganopolysiloxane ayant de 1,60 à 1,90 radical organique par atome de silicium, de viscosité allant de 30 mPa.s à 25°C à 3000 mPa.s à 25°C, ayant de 0,2 à 10 % de groupes hydroxyles,
- un agent réticulant à groupement polyalkoxysilylé, et
- un catalyseur constitué par un chélate ou un complexe organométallique du fer ou du zirconium.

Ces compositions permettent notamment de conférer des propriétés hydrofugeantes à des matériaux divers tels que l'amiante ou les dérivés cellulosiques ou synthétiques et présentent de bonnes propriétés d'antiadhérence. Elles sont utilisables pour la fabrication de joints pour l'industrie automobile notamment.

Ce document n'envisage pas l'élimination de l'amiante floquée ou défloquée.

Le brevet Japonais JP 95068513 décrit un procédé dans lequel on pulvérise une solution à base de silicate de sodium ou de potassium soluble dans l'eau et d'une émulsion et/ou solution de résine synthétique, sur l'amiante en place. Cependant, la méthode proposée, si elle permet de réduire grandement les risques liés à l'amiante en diminuant la quantité de fibres libérées lors des opérations de déflocage, ne la transforme pas chimiquement. Dans ces conditions, si le danger est grandement diminué, il n'en demeure pas moins non nul et reste proportionnel au nombre de fibres libérées lors de sa manipulation.

La demande WO 90/15642 décrit un procédé de destruction de l'amiante en place ou après déflocage par un traitement à l'aide d'une solution aqueuse contenant de 1 à 25 % en poids d'acide(s) organique(s) faible(s) et éventuellement 1 à 10 % en poids d'une source d'ions fluorure. La durée de traitement varie de 2 heures à plusieurs jours. Ce procédé permet indéniablement une destruction chimique de l'amiante. Cependant l'utilisation à des concentrations élevées d'acides et d'ions fluorures nécessite une deuxième étape destinée à neutraliser les résidus d'acide et d'ions fluorures non consommés par la réaction sur l'amiante. Après ce traitement le résidu en place doit en plus être préférentiellement traité par une résine ou une émulsion de latex destinée à le fixer définitivement sur son support. Ce procédé est donc lourd à mettre en oeuvre et n'est pas sans risques pour le personnel chargé de l'appliquer. En effet il est bien connu que l'ion fluor en milieu acide est particulièrement agressif pour la peau et qu'il provoque des brûlures et pénètre sous la peau pour attaquer les terminaisons nerveuses.

La demande WO 94/08661 décrit un procédé de traitement de déchets d'amiante qui consiste à faire réagir ces déchets en présence d'une solution alcaline environ 10 M à une température d'environ 300°C.

La demande WO 93/18867 concerne un procédé pour éliminer l'amiante où l'amiante est convertie par broyage en un matériau non fibreux, stable, comportant des phases minérales, dans lequel le broyage est effectué en suspension aqueuse sous forme d'un broyage très fin, avec au moins une substance libérant dans l'eau des ions $OH^-$. De façon particulièrement avantageuse, le produit broyé obtenu en suspension aqueuse est transvasé dans un autoclave, et y est traité sous haute pression et à haute température.

Les procédés décrits dans ces deux documents ne sont utilisables que sur de l'amiante de déflocage, c'est-à-dire de l'amiante qui a été enlevée des bâtiments où elle se trouvait.

L'abrégé de la demande JP-A-5/311 122 concerne un procédé permettant d'améliorer l'adhérence d'une peinture sur un support minéral et en particulier sur un support amianté par adjonction d'un agent de couplage de formule générale $R'-Si-(OMe\ ou\ Et)_3$.

La demande DE-A-44 26 771 décrit un procédé pour traiter à coeur les supports amiantés à l'aide d'une composition constituée de TEOS ($Si-(OC_2H_5)_4$).

Ainsi, l'art antérieur ne propose pas de traitement pour rendre l'amiante inoffensive de manière simple, à température ambiante, en une seule étape.

Il a maintenant été trouvé que le dépôt d'une couche mince de polymère inorganique ou hybride (organique ou inorganique) selon le procédé sol-gel permet de transformer chimiquement l'amiante en greffant sur les molécules qui constituent les fibres d'amiante d'autres molécules apportées par les réactifs utilisés. Ces molécules d'apport ont

la particularité de se polymériser en un réseau dense et compact comme un véritable verre de synthèse. Les fibres font alors partie intégrante du réseau de polymère et peuvent être considérées comme des éléments constitutifs de ce réseau.

Ainsi un premier objet de l'invention est de rendre l'amiante ou les déchets à base d'amiante inoffensifs tout en conservant leurs propriétés physiques et mécaniques.

Un autre objet de l'invention est de permettre la transformation chimique à froid de l'amiante ou de substances contenant de l'amiante.

Ces objets sont atteints par la composition conforme à l'invention, qui comprend un mélange de:

(a) un composé choisi parmi un organosiloxane de formule $Si(OR)_4$ dans laquelle R est un $(C_1\text{-}C_4)$alkyle ; un alcoxyde métallique de formule $M(OR)_m$ dans laquelle M est un métal choisi parmi B, Ti, Fe, Al, Mg, V, Zr, W, P ou La, m satisfait à la valence du métal et R est tel que défini ci-dessus ; un mélange d'organosiloxane $Si(OR)_4$ et d'alcoxyde métallique $M(OR)_m$ ; un mélange d'organosiloxane $Si(OR)_4$ et de suspension de silice colloïdale : un mélange d'alcoxyde métallique $M(OR)_m$ et de suspension de silice colloïdale ; ou un mélange d'organosiloxane $Si(OR)_4$, d'alcoxyde métallique $M(OR)_m$ et de suspension de silice colloïdale ;

(b) au moins un composé organosilicique de formule :

$$[X\text{-}(CH_2)_n]_x\text{-}Si(OR)_{4-x}$$

dans laquelle

- R est tel que défini ci-dessus ;
- X est un radical sulfhydryle, amino, isocyanato, (méth)acryloyle, éthylacryloyle, vinyle, phényle, anilino, uréido, thiocyanato, nitrilo ou époxy ou un groupe contenant un tel radical ;
- n varie de 0 à 3 ; et
- x varie de 1 à 3 ;

(c) au moins un composé choisi parmi

- (c1) un monomère à base d'éthylèneglycol, d'acide (méth)acrylique, maléique ou phtalique, de vinyle, d'acrylamide ou d'oxyde d'éthylène ou de (poly)méthylène ;
- (c2) un polymère dont le monomère constitutif est à base d'éthylèneglycol, d'acide (méth)acrylique, de vinyle, de bisphénol ou d'acrylamide ; ou
- (c3) un (co)polymère choisi parmi le polyéthylèneglycol, le bisphénol A carbonate, l'uréthane carbonate, l'uréthane acrylate, le polybutadiène hydrogéné, le polyéthylène téréphtalate, le poly[bis(méthoxyéthoxyéthoxy) phosphazène], le poly(2-méthyl-2-oxazoline), les polyéthercétones, les copolymères acide acrylique/acide maléique ou les copolymères éthylène/acide acrylique ; et

(d) au moins un initiateur de radicaux libres.

Par $(C_1\text{-}C_4)$alkyle, on entend dans la présente description et dans les revendications un groupe méthyle, éthyle, propyle, i-propyle, butyle, i-butyle, s-butyle ou t-butyle.

La quantité des constituants (a), (b), (c) et (d) utilisée ne constitue pas un facteur pour atteindre l'objet de l'invention.

Avantageusement on utilise de 0,5 à 25 % en poids, de préférence de 5 à 20 % en poids, de constituant (b) par rapport au constituant (a) ; de 1 à 200 % en poids, de préférence de 10 à 150 % en poids de constituant (c) par rapport à la somme des constituants (a) et (b) ; et de 0,5 à 50 % en poids, de préférence de 1 à 40 % en poids de constituant (d) par rapport à la somme des constituants (b) et (c).

Généralement, l'organosiloxane est utilisé seul ou en mélange avec l'alcoxyde métallique défini ci-dessus et/ ou avec la suspension colloïdale de silice définie ci-dessus, dont la taille des particules de silice est avantageusement comprise entre 5 et 75 nm, de préférence entre 6 et 50 nm.

Toutefois, un mode de réalisation particulier de l'invention prévoit d'utiliser un mélange d'alcoxyde métallique et de suspension colloïdale de silice, tels que définis précédemment, comme constituant (a).

Le substituant X du composé organosilicique conforme à l'invention est un radical sulfhydryle, amino, isocyanato, (méth)acryloyle, éthylacryloyle, vinyle, phényle, anilino, uréido, thiocyanato, nitrilo ou époxy ou un groupe contenant un tel radical, comme par exemple un groupe de formule:

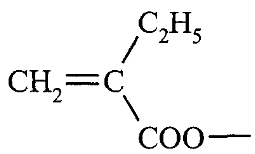 ; 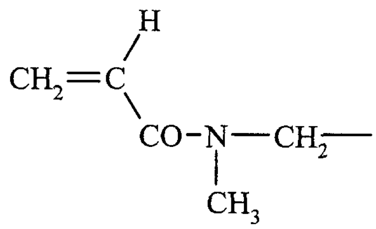 ;

$—(CH_2)_3—NH—(CH_2)_2—NH_2$ ;

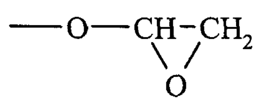 ;

ou

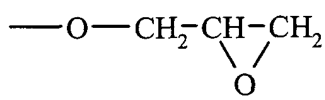

Les composés organosiliciques conformes à l'invention sont susceptibles d'établir, d'une part, par l'intermédiaire du substituant X, des liaisons chimiques avec le réseau polymérique obtenu par polymérisation des monomères organiques, et d'autre part, par l'intermédiaire des groupements hydroxyles portés par l'atome de silicium, des liaisons chimiques avec le réseau de silice hydrolysée/condensée obtenu à partir de l'organosiloxane.

Parmi les monomères organiques, on peut citer notamment :

- les monomères à base d'éthylène glycol, comme par exemple l'éthylèneglycol allyl éther, l'éthylèneglycol glycidyl éther, l'éthylèneglycol vinyl éther, le téréphtalate d'éthylèneglycol ;
- les monomères à base d'acide (méth)acrylique, maléique ou phtalique comme par exemple l'acide (méth)acrylique, les (méth)acrylates de ($C_1$-$C_4$)alkyle, d'amino($C_1$-$C_4$)alkyle, de ($C_1$-$C_4$)alcoxy($C_1$-$C_4$)alkyle, d'hydroxyphénoxy ($C_1$-$C_4$)alkyle, d'hydroxy($C_1$-$C_4$)alkyle ou d'un composé éthylèneglycol ; les di(méth)acrylates de ($C_1$-$C_4$)alkyle ; le méthacrylate de sodium ; le méthacrylate de sulfoéthyle ; le (méth)acrylate de glycidyle ou le méthacrylate de benzyle ;
- les monomères à base de vinyle, comme par exemple l'acétate de vinyle, l'alcool vinylique, la vinylpyrrolidone, le chlorure de vinyle ;
- les monomères à base de bisphénol, comme par exemple le bisphénol A, le diacrylate de bisphénol A diglycidyl éther, le diméthacrylate de bisphénol A ou le di(méth)acrylate d'éthylate de bisphénol A ;
- les monomères à base d'acrylamide, comme par exemple l'acrylamide, les hydroxy($C_1$-$C_4$)alkylacrylamides, les ($C_1$-$C_4$)alkylacrylamides, les di($C_1$-$C_4$)alkylacrylamides ;
- les monomères à base d'oxyde d'éthylène ou de (poly)méthylène, comme par exemple l'oxyde d'éthylène, l'oxyde de tétraméthylène ;

A titre d'exemple de (méth)acrylate d'un composé éthylèneglycol, on peut citer notamment le (méth)acrylate de vinyléthylèneglycol, le (méth)acrylate d'éthylèneglycoldicyclopentényle, le (méth)acrylate d'éthylèneglycol méthyl éther, le (méth)acrylate d'éthylèneglycol éthyl éther, le (méth)acrylate d'éthylèneglycol phényl éther ou bien encore le (méth)acrylate d'éthyl benzyl éther.

Selon un mode de réalisation de l'invention, on peut directement utiliser à la place dudit (desdits) monomères (s) un ou plusieurs polymères dont le(s) monomère(s) constitutif(s) est (sont) à base d'éthylèneglycol, d'acide (méth) acrylique, de vinyle, de bisphénol ou d'acrylamide comme décrit précédemment, et/ou un ou plusieurs (co)polymères choisi parmi le polyéthylèneglycol, le bisphénol A carbonate, l'uréthane carbonate, l'uréthane acrylate, le polybutadiène hydrogéné, le polyéthylène téréphtalate, le poly[bis(méthoxyéthoxyéthoxy)phosphazène], le poly(2-méthyl-2-oxazoline), les polyéthercétones, les copolymères acide acrylique/acide maléique ou les copolymères éthylène/acide acrylique.

La composition conforme à l'invention comprend également au moins un initiateur de radicaux libres. En général, on utilise comme initiateur de radicaux libres un composé azoïque, un peroxyde ou bien encore un mélange de peroxyde et d'amine tertiaire.

Les composés azoïques susceptibles d'être utilisés dans le cadre de la présente invention incluent par exemple le 2,2'-azobisisobutyronitrile, le 1,1'-azobis(cyclohexanecarbonitrile), le dichlorhydrate de 2,2'-azobis(2-méthylpropionamidine) ou encore le 4,4'-azobis(acide 4-cyanovalérique). Des exemples de peroxydes comprennent l'eau oxygénée, le persulfate de sodium, de potassium ou d'ammonium, le peroxyde de benzoyle, le cyclohexanoneperoxyde ou bien encore le t-butyl-hydroperoxyde. Les mélanges peroxyde + amine tertiaire appropriés aux fins de l'invention comprennent par exemple les mélanges de persulfate de sodium, de potassium ou d'ammonium et de triéthanolamine ou bien encore les mélanges d'eau oxygénée et de triéthanolamine.

La composition conforme à l'invention peut être préparée en mélangeant les différents constituants qui la composent en présence d'un catalyseur capable d'hydrolyser notamment l'organosiloxane, dans un solvant inerte comme l'eau, un alcool tel que le méthanol ou l'éthanol, ou un mélange eau/alcool.

Ainsi, les organosiloxanes selon l'invention réagissent en présence d'eau et d'un catalyseur selon le schéma suivant :

$$Si(OR)_4 \rightarrow Si(OH)_4 + 4\ ROH$$

On utilise généralement comme catalyseur un acide fort, comme par exemple HF, $H_2SiF_6$, HCl, $H_2SO_4$, $H_3PO_4$ ou $HNO_3$ ; une base forte, comme par exemple NaOH, KOH ou $NH_4OH$ ; et/ou une source d'ions fluorures, comme par exemple $NH_4F$ ou NaF.

Selon un mode de réalisation préféré de l'invention, on utilise le tétraéthoxysilane comme organosiloxane.

Avantageusement, on prépare séparément :

(i) une première solution contenant l'organosiloxane, la suspension colloïdale de silice et/ou l'alcoxyde métallique en présence du catalyseur de réaction, dans un solvant inerte ; et

(ii) une seconde solution contenant les autres constituants de la composition dans un solvant inerte, éventuellement identique à celui utilisé dans l'étape (i),

puis on mélange les deux solutions pour obtenir la composition selon l'invention qui est prête à être appliquée sur l'amiante ou sur des substances contenant de l'amiante.

La quantité de catalyseur utilisée varie suivant sa nature, et peut être faible. Par exemple, on peut utiliser de 1 à 25 % en poids, de préférence de 2 à 20 % de catalyseur par rapport à l'organosiloxane ou, le cas échéant, par rapport à la suspension colloïdale de silice.

La quantité de solvant utilisée représente environ 30 à 75 % en poids, de préférence de 40 à 65 % en poids, de la composition conforme à l'invention.

Un autre objet de l'invention concerne un procédé de traitement de l'amiante ou de substances contenant de l'amiante qui consiste à appliquer sur l'amiante ou les substances en contenant la composition conforme à l'invention.

Cette application peut s'effectuer par pulvérisation, trempage, ou tout autre moyen permettant d'obtenir une imprégnation complète des fibres d'amiantes.

L'amiante ainsi traitée est transformée chimiquement à froid par greffage ou pontage de molécules de $SiO_2$ et/ou d'oxydes métalliques sur les sites $SiO_2$, MgO, FeO et/ou CaO des fibres d'amiante.

Le procédé conforme à l'invention permet de traiter l'amiante (ou les substances en contenant) en place dans les bâtiments et l'amiante ou les substances en contenant (déchets de fabrication de plaquettes de frein, amiante de déflocage, joints isolants amiantés, plaques d'amiante ciment, etc.) avant son stockage en centre d'élimination autorisé par la réglementation.

L'invention va maintenant être décrite plus en détail à l'aide des exemples et figures ci-après.

Plus particulièrement, les figures 1 et 2 représentent une photographie au microscope électronique de fibres d'amiante chrysotile traitées par une composition selon l'invention ; la figure 3 représente les spectres par dispersion de rayons X de ces fibres traitées par comparaison aux fibres non traitées et à la composition selon l'invention.

Dans les exemples, on utilise les abréviations suivantes :

$B(OEt)_3$ : triéthylborate
HEMA : méthacrylate d'hydroxyéthyle
HCl : acide chlorhydrique

LEVASIL : suspension colloïdale de silice commercialisée par la Société BAYER
$Mg(OEt)_2$ : éthylate de magnésium
MMA : méthacrylate de méthyle
$N(EtOH)_3$ : triéthanolamine
$NH_4F$ : fluorure d'ammonium
$NH_4OH$ : hydroxyde d'ammonium
$(NH_4)_2S_2O_8$ : persulfate d'ammonium
TEOS : tétraéthoxysilane
TMSM : méthacrylate de triméthoxysilylpropyle
Les proportions des constituants des compositions des exemples sont exprimées en parties en poids.

EXEMPLE 1

Dans un premier réacteur, équipé d'une dispositif d'agitation, on introduit les réactifs suivants :

| | |
|---|---|
| TEOS | 10 |
| HCl (36%) | 2 |
| $NH_4F$ | 0,2 |
| $Mg(OEt)_2$ | 1 |
| Eau | 8 |
| Ethanol | 16 |

On laisse ce mélange s'hydrolyser à température ambiante pendant quelques minutes sous agitation.
Dans le même temps on aura préparé dans un deuxième réacteur de même type, le mélange suivant :

| | |
|---|---|
| MMA | 5 |
| TMSM | 1 |
| Péroxyde de benzoyle | 1 |
| Ethanol | 4 |

Ce mélange est soumis à une source de rayonnement (IR, UV, etc...) pendant 15 min., temps nécessaire à l'initiation de la réaction de polymérisation.
Au bout de 15 min., les deux solutions sont mélangées. La composition ainsi obtenue est ensuite appliquée, en laboratoire, par pulvérisation sur de l'amiante chrysotile de déflocage.
Au bout de quelques minutes la composition ainsi pulvérisée commence à gélifier sous l'effet de la polycondensation de la silice. Dans le même temps la polymérisation du MMA en PMMA se poursuit.
Enfin au bout de 8 à 12 heures à température ambiante, le film de liquide qui a été déposé sur les fibres s'est transformé en un film dur de verre hybride. Les propriétés mécaniques de ce verre hybride continuent de s'améliorer au cours des jours suivants.
Au bout de 8 jours, l'amiante ainsi traitée a été examinée au microscope électronique (cf Fig. 1 et 2) et il a été procédé à une microanalyse par dispersion en énergie de Rayons X sur les 2 zones B et C. Le résultat obtenu a été comparé à une analyse identique effectuée sur des fibres d'amiante non traitées.
L'objet de cette investigation est de mettre en évidence la présence, sur les fibres d'amiante traitées, d'un composé chimiquement intermédiaire entre la composition chimique du gel seul et celle d'une fibre d'amiante non traitée.
La figure 3 représente les 3 spectres A, B et C obtenus :

A : fibres d'amiante non traitées
B : gel seul
C : fibres d'amiantes recouvertes d'une fine pellicule de gel.

Le spectre de C montre que les fibres d'amiante recouvertes d'une fine pellicule de gel ont une composition chimique entre celle de l'amiante (spectre de A) et celle du gel (spectre de B).
Compte-tenu de l'échelle submicronique à laquelle se produisent ces phénomènes, il s'agit là d'une preuve de liaison chimique entre le gel déposé et les fibres d'amiante.

EXEMPLE 2

Dans un premier réacteur on prépare le mélange suivant :

| | |
|---|---|
| TEOS | 10 |
| HCl | 0,42 |
| $N(EtOH)_3$ | 0,15 |
| $B(OEt)_3$ | 1 |
| TMSM | 1 |
| Eau | 13,5 |

On laisse ce mélange s'hydrolyser à température ambiante et sous agitation pendant quelques minutes.

Dans le même temps on prépare dans un deuxième réacteur un autre mélange :

| | |
|---|---|
| HEMA | 5 |
| $NH_4OH$ | 0,6 |
| $(NH_4)_2S_2O_8$ | 0,2 |
| Eau | 6 |

Lorsque le premier mélange est totalement hydrolysé, on ajoute alors le mélange 2 au mélange 1 et après une agitation vigoureuse de quelques minutes, la solution ainsi obtenue est prête à être pulvérisée sur l'amiante ou les substances en contenant.

EXEMPLE 3

Dans un premier réacteur, on prépare le mélange suivant :

| | |
|---|---|
| TEOS | 2 |
| LEVASIL 4055 | 18 |
| HCl | 0,4 |
| TMSM | 0,5 |
| Eau | 4 |
| $N(EtOH)_3$ | 0,15 |

On laisse ce mélange s'hydrolyser à température ambiante et sous agitation pendant quelques minutes.

Dans le même temps on prépare dans un deuxième réacteur un autre mélange :

| | |
|---|---|
| HEMA | 5 |
| $NH_4OH$ | 0,6 |
| $H_2O_2$ | 3 |
| Eau | 6 |

Lorsque le premier mélange est totalement hydrolysé, on ajoute alors le mélange 2 au mélange 1 et après une agitation vigoureuse de quelques minutes, la solution ainsi obtenue est prête à être pulvérisée sur l'amiante ou les substances en contenant.

## Revendications

**1.** Composition pour le traitement de l'amiante, comprenant un mélange de:

(a) un composé choisi parmi un organosiloxane de formule $Si(OR)_4$ dans laquelle R est un $(C_1-C_4)$alkyle ; un alcoxyde métallique de formule $M(OR)_m$ dans laquelle M est un métal choisi parmi B, Ti, Fe, Al, Mg, V, Zr, W, P ou La, m satisfait à la valence du métal et R est tel que défini ci-dessus ; un mélange d'organosiloxane $Si(OR)_4$ et d'alcoxyde métallique $M(OR)_m$ ; un mélange d'organosiloxane $Si(OR)_4$ et de suspension de silice

colloïdale; un mélange d'alcoxyde métallique $M(OR)_m$ et de suspension de silice colloïdale ; ou un mélange d'organosiloxane $Si(OR)_4$, d'alcoxyde métallique $M(OR)_m$ et de suspension de silice colloïdale ;
(b) au moins un composé organosilicique de formule :

$$[X-(CH_2)_n]_x-Si(OR)_{4-x}$$

dans laquelle

- R est tel que défini ci-dessus ;
- X est un radical sulfhydryle, amino, isocyanato, (méth)acryloyle, éthylacryloyle, vinyle, phényle, anilino, uréido, thiocyanato, nitrilo ou époxy ou un groupe contenant un tel radical ;
- n varie de 0 à 3 ; et
- x varie de 1 à 3 ;

(c) au moins un composé choisi parmi

- (c1) un monomère à base d'éthylèneglycol, d'acide (méth)acrylique, maléique ou phtalique, de vinyle, d'acrylamide ou d'oxyde d'éthylène ou de (poly)méthylène ;
- (c2) un polymère dont le monomère constitutif est à base d'éthylèneglycol, d'acide (méth)acrylique, de vinyle, de bisphénol ou d'acrylamide ; ou
- (c3) un (co)polymère choisi parmi le polyéthylèneglycol, le bisphénol A carbonate, l'uréthane carbonate, l'uréthane acrylate, le polybutadiène hydrogéné, le polyéthylène téréphtalate, le poly[bis(méthoxyéthoxyéthoxy)phosphazène], le poly(2-méthyl-2-oxazoline), les polyéthercétones, les copolymères acide acrylique/acide maléique ou les copolymères éthylène/acide acrylique ; et

(d) au moins un initiateur de radicaux libres.

**2.** Composition selon la revendication 1, dans laquelle on utilise l'organosiloxane $Si(OR)_4$ comme constituant (a).

**3.** Composition selon la revendication 1, dans laquelle on utilise un mélange d'organosiloxane $Si(OR)_4$ et d'alcoxyde métallique $M(OR)_m$ comme constituant (a).

**4.** Composition selon la revendication 1, dans laquelle on utilise un mélange d'organosiloxane $Si(OR)_4$ et de suspension colloïdale de silice comme constituant (a).

**5.** Composition selon la revendication 1, dans laquelle on utilise un mélange d'alcoxyde métallique $M(OR)_m$ et de suspension colloïdale de silice comme constituant (a).

**6.** Composition selon la revendication 1, dans laquelle on utilise un mélange d'organosiloxane $Si(OR)_4$, d'alcoxyde métallique $M(OR)_m$ et de suspension colloïdale de silice comme constituant (a).

**7.** Composition selon l'une des revendications 1 à 6, dans laquelle l'organosiloxane est le tétraéthoxysilane.

**8.** Composition selon l'une des revendications 1 à 7, dans laquelle l'initiateur de radicaux libres est choisi parmi les composés azoïques, les peroxydes ou les mélanges peroxyde/amine tertiaire.

**9.** Procédé de traitement de l'amiante ou de substances en contenant, qui consiste à appliquer sur celles-ci la composition selon l'une des revendications 1 à 8.

## Claims

**1.** A composition for treating asbestos, comprising a mixture of:

(a) a compound selected from an organosiloxane of the formula $Si(OR)_4$, in which R is a $(C_1-C_4)$alkyl; a metal alkoxide of the formula $M(OR)_m$, in which M is a metal selected from B, Ti, Fe, Al, Mg, V, Zr, W, P and La, m satisfies the valency of the metal and R is as defined above; a mixture of an organosiloxane $Si(OR)_4$ and a

metal alkoxide $M(OR)_m$; a mixture of an organosiloxane $Si(OR)_4$ and a suspension of colloidal silica; a mixture of a metal alkoxide $M(OR)_m$ and a suspension of colloidal silica; and a mixture of an organosiloxane $Si(OR)_4$, a metal alkoxide $M(OR)_m$ and a suspension of colloidal silica;

(b) at least one organosilicon compound of the formula

$$[X\text{-}(CH_2)_n]_x\text{-}Si(OR)_{4\text{-}x}$$

in which:

- R is as defined above;
- X is a sulfhydryl, amino, isocyanato, (meth)acryloyl, ethylacryloyl, vinyl, phenyl, anilino, ureido, thiocyanato, nitrilo or epoxy radical or a group containing such a radical;
- n varies from 0 to 3; and
- x varies from 1 to 3;

(c) at least one compound selected from:

- (c1) a monomer based on ethylene glycol, (meth)acrylic, maleic or phthalic acid, vinyl, acrylamide or ethylene or (poly)methylene oxide;
- (c2) a polymer whose constituent monomer is based on ethylene glycol, (meth)acrylic acid, vinyl, bisphenol or acrylamide; and
- (c3) a (co)polymer selected from polyethylene glycol, bisphenol A carbonate, urethane carbonate, urethane acrylate, hydrogenated polybutadiene, polyethylene terephthalate, poly[bis(methoxyethoxyethoxy) phosphazene], poly(2-methyl-2-oxazoline), polyether-ketones, acrylic acid/maleic acid copolymers and ethylene/acrylic acid copolymers; and

(d) at least one free radical initiator.

**2.** Composition according to claim 1 in which the organosiloxane $Si(OR)_4$ is used as constituent (a).

**3.** Composition according to claim 1 in which a mixture of an organosiloxane $Si(OR)_4$ and a metal alkoxide $M(OR)_m$ is used as constituent (a).

**4.** Composition according to claim 1 in which a mixture of an organosiloxane $Si(OR)_4$ and a suspension of colloidal silica is used as constituent (a).

**5.** Composition according to claim 1 in which a mixture of a metal alkoxide $M(OR)_m$ and a suspension of colloidal silica is used as constituent (a).

**6.** Composition according to claim 1 in which a mixture of an organosiloxane $Si(OR)_4$, a metal alkoxide $M(OR)_m$ and a suspension of colloidal silica is used as constituent (a).

**7.** Composition according to one of claims 1 to 6 in which the organosiloxane is tetraethoxysilane.

**8.** Composition according to one of claims 1 to 7 in which the free radical initiator is selected from azo compounds, peroxides and peroxide/tertiary amine mixtures.

**9.** A method of treating asbestos or substances containing it, which consists in applying thereto the composition according to one of claims 1 to 8.

## Patentansprüche

**1.** Zusammensetzung zur Behandlung von Asbest, umfassend eine Mischung aus:

(a) einer Verbindung, ausgewählt aus einem Organosiloxan der Formel $Si(OR)_4$, worin R ein $C_{1\text{-}4}$-Alkylrest ist, einem Metallalkoxid der Formel $M(OR)_m$, worin M ein Metall, ausgewählt aus B, Ti, Fe, Al, Mg, V, Zr, W,

P oder La, m gleich der Wertigkeit des Metalls und R wie oben definiert sind, einer Mischung aus dem Organosiloxan $Si(OR)_4$ und dem Metallalkoxid $M(OR)_m$, einer Mischung aus dem Organosiloxan $Si(OR)_4$ und einer Suspension aus kolloidaler Kieselsäure, einer Mischung aus dem Metallalkoxid $M(OR)_m$ und einer Suspension aus kolloidaler Kieselsäure oder aus einer Mischung aus dem Organosiloxan $Si(OR)_4$, dem Metallalkoxid M $(OR)_m$ und einer Suspension aus kolloidaler Kieselsäure;

(b) mindestens eine Organosiliziumverbindung der Formel:

$$[X-(CH_2)_n]_x-Si(OR)_{4-x},$$

worin gilt:

- R ist wie oben definiert;
- X ist ein Sulfhydryl-, Amino-, Isocyanato-, (Meth)acryloyl-, Ethylacryloyl-, Vinyl-, Phenyl-, Anilino-, Ureido-, Thiocyanato-, Nitrilo- oder Epoxyrest oder eine Gruppe, die einen derartigen Rest enthält;
- n beträgt 0 bis 3; und
- x beträgt 1 bis 3;

(c) mindestens eine Verbindung, ausgewählt aus

- (c1) einem Monomer auf Basis vOn Ethylenglycol, (Meth)acryl-, Malein- oder Phthalsäure, von Vinyl, Acrylamid oder Ethylenoxid oder (Poly)methylenoxid;
- (c2) einem Polymer, dessen Aufbau-Monomer auf Ethylenglycol, (Meth)acrylsäure, Vinyl, Bisphenol oder auf Acrylamid beruht; oder aus
- (c3) einem (Co)polymer, ausgewählt aus Polyethylenglycol, Bisphenol A-Carbonat, Urethancarbonat, Urethanacrylat, hydriertem Polybutadien, Polyethylenterephthalat, Poly[bis(methoxyethoxyethoxy)phosphazen], Poly(2-methyl-2-oxazolin), Polyetherketonen, Acryl/Maleinsäure-Copolymeren oder aus Ethylen/Acrylsäure-Copolymeren; sowie

(d) mindestens einen Initiator für freie Radikale.

**2.** Zusammensetzung gemäß Anspruch 1, worin man das Organosiloxan $Si(OR)_4$ als Bestandteil (a) verwendet.

**3.** Zusammensetzung gemäß Anspruch 1, worin man eine Mischung aus dem Organosiloxan $Si(OR)_4$ und dem Metallalkoxid $M(OR)_m$ als Bestandteil (a) verwendet.

**4.** Zusammensetzung gemäß Anspruch 1, worin man eine Mischung aus dem Organosiloxan $Si(OR)_4$ und der kolloidalen Kieselsäure-Suspension als Bestandteil (a) verwendet.

**5.** Zusammensetzung gemäß Anspruch 1, worin man eine Mischung aus dem Metallalkoxid $M(OR)_m$ und der kolloidalen Kieselsäure-Suspension als Bestandteil (a) verwendet.

**6.** Zusammensetzung gemäß Anspruch 1, worin man eine Mischung aus dem Organosiloxan $Si(OR)_4$, dem Metallalkoxid $M(OR)_m$ und aus der kolloidalen Kieselsäure-Suspension als Bestandteil (a) verwendet.

**7.** Zusammensetzung gemäß einem der Ansprüche 1 bis 6, worin das Organosiloxan Tetraethoxysilan ist.

**8.** Zusammensetzung gemäß einem der Ansprüche 1 bis 7, worin der Initiator für die freien Radikale aus Azo-Verbindungen, Peroxiden oder aus Mischungen aus Peroxid/tertiärem Amin ausgewählt ist.

**9.** Verfahren zur Behandlung von Asbest oder von Substanzen, die dieses enthalten, wobei man auf jene die Zusammensetzung gemäß einem der Ansprüche 1 bis 8 aufbringt.

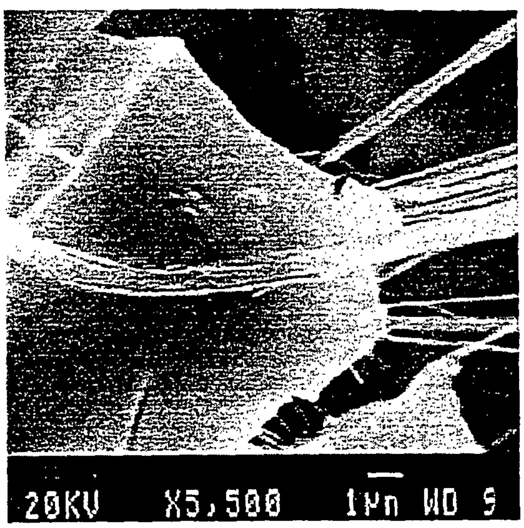


FIG.1

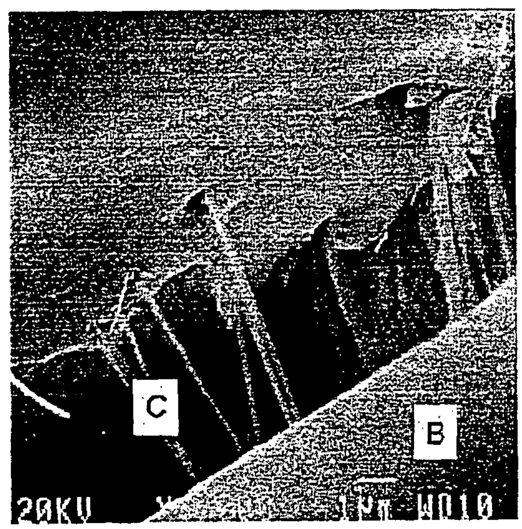


FIG.2

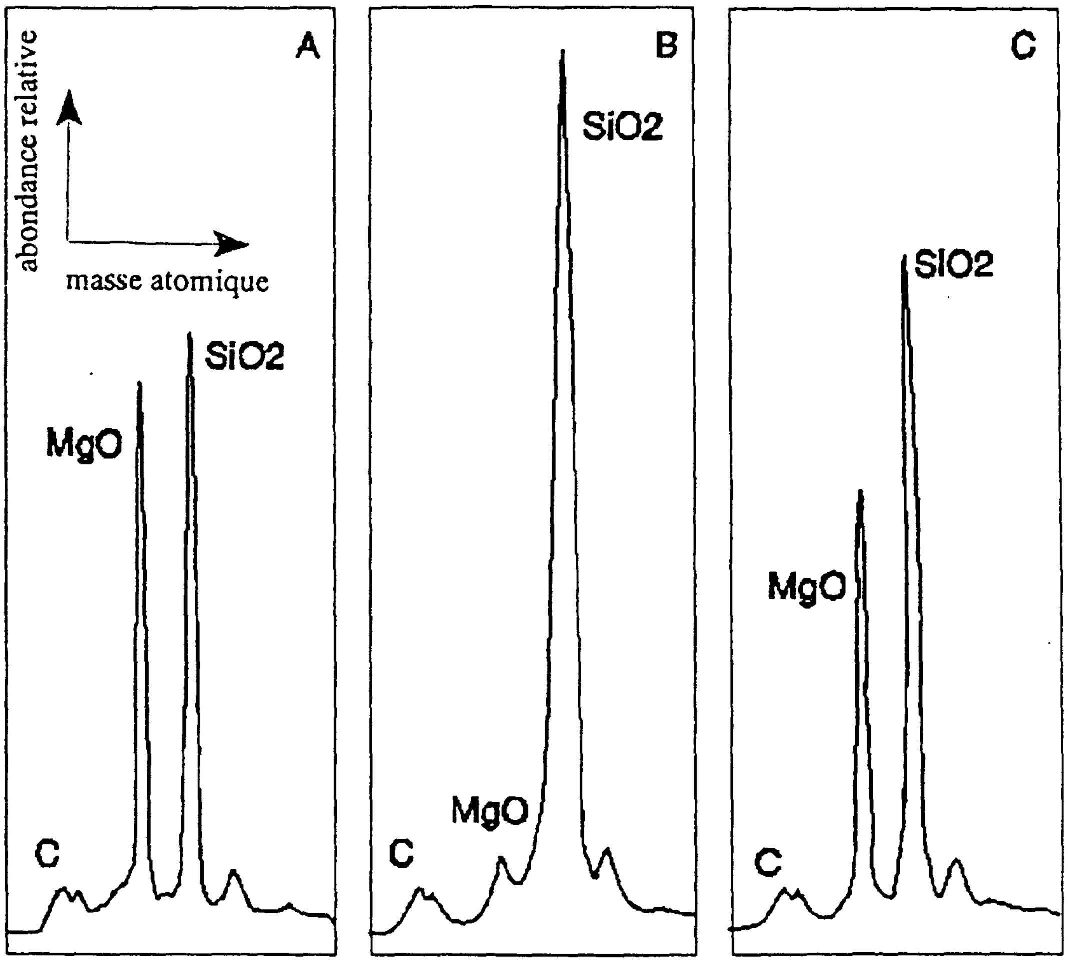
A
abondance relative
masse atomique
MgO
SiO2
C
B
SiO2
MgO
C
C
SiO2
MgO
C

FIG.3